(19) Europäisches Patentamt
European Patent Office
Office européen des brevets

(11) **EP 1 760 643 A2**

(12) **EUROPEAN PATENT APPLICATION**

(43) Date of publication:
**07.03.2007 Bulletin 2007/10**

(51) Int Cl.:
***G06N 5/04*** *(2006.01)*

(21) Application number: **06119014.6**

(22) Date of filing: **16.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.08.2005 GB 0516786**

(71) Applicant: **Remote Operations Ltd.**
**East Parade**
**HG1 5LT Yorkshire , Harrogate (GB)**

(72) Inventors:
• **Sucharov, Leon**
**HARROGATE, Yorkshire HG1 2JF (GB)**
• **Sucharov, Toby**
**HARROGATE, Yorkshire HG1 2JF (GB)**
• **Rice, Philip**
**HARROGATE, Yorkshire HG1 4HB (GB)**

(74) Representative: **Stanley, David William**
**Stanleys**
**Intellectual Property**
**Kings Court**
**12 King Street**
**Leeds LS1 2HL (GB)**

(54) **Data processing**

(57)     A data processing system 1 receives rules and splits them into their fundamental fragments that are joined by nodes. The data processing system 1 then processes input data by the rule fragments and produces output data from nodes that are satisfied by their respective rule fragments.

FIG. 9

**Description**

The present invention relates to data processing and is concerned particularly with data processing systems that function as rules engines, and associated methods of data processing.

A rules engine takes a set of input data and processes it in accordance with a set of predetermined rules to produce a set of output data. Typically, a rules engine may be realised in either hardware or software.

Known rules engines process data to produce an output but may be limited in the following respects:

• they do not allow structured data to be processed with structured rules;

• they do not support contextual issues such as the same rule firing multiple times within the input;

• the traditional approach processes rules sequentially, making execution times dependant on the number of rules.

Preferred embodiments of the present invention aim to provide rules engines that are improved in these respects.

According to one aspect of the present invention, there is provided a data processing system arranged:

a. to receive rules data representing a plurality of rules; and

b. to split each rule into a plurality of fundamental rule fragments with nodes that represent how the fundamental rule fragments interrelate:

the data processing system being further arranged:

c. to receive input data;

d. to process the input data non-sequentially by said fundamental rule fragments; and

e. to derive an output from each node for which all fundamental rule fragments connected to that node have been satisfied.

Preferably, said rules have an IF, THEN structure.

Preferably, each of said fundamental rule fragments comprises a single IF condition.

Preferably, said output from each node for which all fundamental rule fragments connected to that node have been satisfied is a THEN result.

A data processing system as above is preferably arranged to process data comprising XML elements, value-attribute pairs or concepts and relations for a conceptual graph.

Preferably, in a data processing system as above, the rules are arranged into sets of generations which are processed sequentially, the set of rules within each generation being processed non-sequentially.

Preferably, the rules include inheritance rules.

The invention also extends to a method of processing data, comprising the steps of:

a. receiving rules data representing a plurality of rules;

b. splitting each rule into a plurality of fundamental rule fragments with nodes that represent how the fundamental rule fragments interrelate:

c. receiving input data;

d. processing the input data non-sequentially by said fundamental rule fragments; and

e. deriving an output from each node for which all fundamental rule fragments connected to that node have been satisfied.

Preferably, such a method is carried out by a data processing system according to any of the preceding aspects of the invention.

For a better understanding of the invention, and to show how embodiments of the same may be carried into effect, reference will now be made, by way of example, to the accompanying diagrammatic drawings, in which:

Figure 1 is a process diagram to illustrate basic functionality of a Non-Sequential Rules Engine (NSRE) comprising one example of an embodiment of the invention;

Figure 2 illustrates an example of the structure of a model of a simple non-sequential rules engine based on value attribute pairs;

Figure 3 illustrates an example of a condition model to process a simple conceptual graph;

Figure 4 is a simple example of a graph that can be processed using a contextual, structured graph;

Figure 5 illustrates an output for a situation;

Figure 6 shows the graph of Figure 4 combined with the output of Figure 5;

Figure 7 illustrates an example of an NSRE having ontological data with multiple inheritance;

Figure 8 illustrates an object that holds NSRE rules; and

Figure 9 is a block schematic drawing of one example of a data processing system in accordance with an embodiment of the invention.

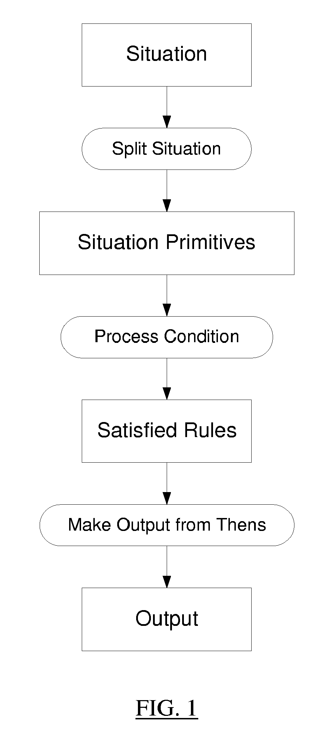

The Non-Sequential Rules Engine (NSRE) having the functionality illustrated in Figure 1 is a data processing apparatus that transforms a situation and produces an output based on the rules within the NSRE. It may be realised in either hardware or software and may be regarded as a rules based object that takes an input of arbitrary complexity and generates a deterministic output.

At its simplest, the rules engine can be regarded as an indexing of the rules based on a partial ordering of conditions.

There are many features that can be used to enhance functionality of the NSRE. However, the fundamental NSRE object transforms situations by executing the process diagram shown in Figure 1.

The illustrated NSRE uses a standard IF, THEN structure for rules. The IF part of the rule is the condition and may comprise complex data structures. The NSRE process starts by breaking the condition down into its primitive components.

The primitive component is the basic building block of data and is defined by the data structure used. This could comprise XML elements, value-attribute pairs for a database NSRE or concepts and relations for a conceptual graph based NSRE.

The condition model is processed to find satisfied rules and an output is formed from the THEN parts of the satisfied rules.

The condition has a hierachical structure of nodes and the hierarchy may take the form of a tree or Directed Graph. This structure has at its highest level a hashed set of nodes which represent every primitive component that is present in its rules. Nodes are linked to join nodes which represent more complex data structures built up by adding together two or more primitive components.

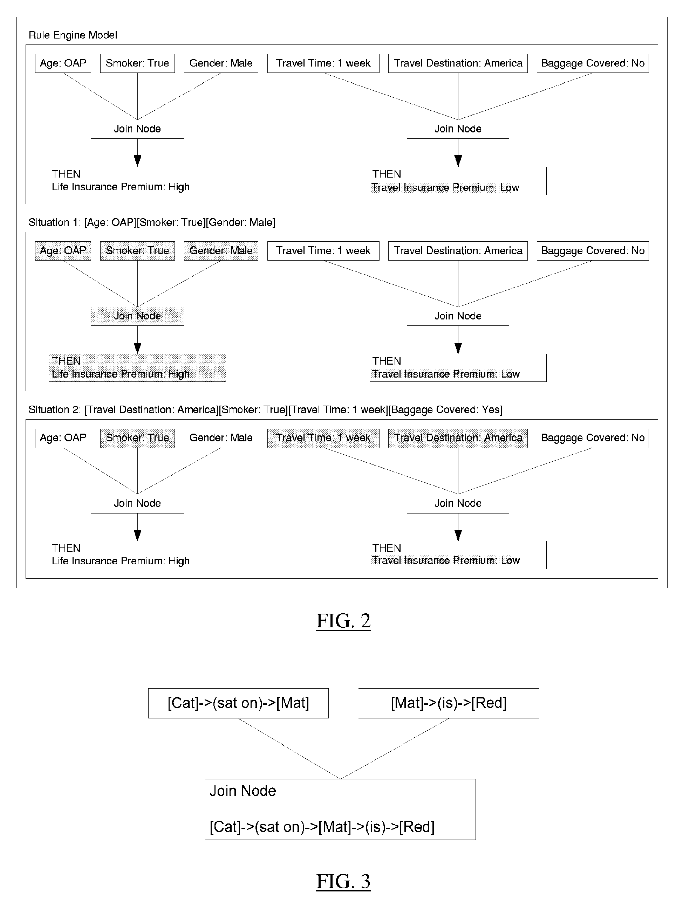

Figure 2 is a diagrammatic representation of a value-attribute pair condition model built up from a few simple rules.

The situation primitive concepts are fed into the NSRE condition model and the nodes which represent each primitive component are found through the hashset. Once the node is satisfied, it passes the situation fragment down to its children (each of which has 2 or more parents). When all the parents of a child are satisfied, then the child is also satisfied.

Each node represents a part or all of the condition for one of the NSREs rules. Each rule will have a node which exactly represents its condition. When this node is satisfied through the process decided above, then the rule is also considered satisfied.

An output is made from satisfied rules.

At the end of the process, the THEN component from each satisfied rule is added into the output data structure and this is returned by the NSRE as the final result of the transform operation.

In the example of Figure 2, the simple NSRE based on value attribute pairs has the following rules.

1. IF: [Gender: Male] [Smoker: True][Age: OAP]
THEN: [Life Insurance Premium: High]

2. IF: [Travel Destination: America] [Travel time: 1 week] [Baggage Covered: No]
THEN: [Travel Insurance Premium: Low]

In Situation 1 of Figure 2, the nodes which contain all the fragments that satisfy the first rule are satisfied and so the join node representing the entire rule is satisfied and the THEN part of the rule fires.

In Situation 2 of Figure 2, the disparate data satisfies a series of nodes throughout the model. However, neither join node is satisfied as their parent nodes aren't all satisfied. As nodes need only be evaluated when they become true, it can be seen that no processing time is wasted in the NSRE for unsatisfied nodes.

The illustrated NSRE has several innovative features over traditional rules engines that are embodied by either hardware or software.

Firstly, with regard to the condition model, unlike traditional rules engines that process rules as a list one at a time, the NSRE processes every rule at once. It can be viewed as searching the set of rules for the rules that are true, rather than executing them. This is achieved by breaking the condition component of every rule into its primitive components and representing these components as nodes. These nodes are linked to a hierarchy of join nodes, which together represent the condition of each rule.

Traditionally, simplistic rules engines process rules sequentially, which means that process time is related to the number of rules within the rule engine. However, the process time for an NSRE is loosely correlated to the number of rules within the system as every single rule is processed together, and rules unrelated to the situation under transform will not significantly affect process time.

When the situation primitives are presented to the condition model, which represents the sum total of the rules within the NSRE, the nodes within the condition model are found using a set. Any nodes unrelated to the situation being processed will not increase the process time as these nodes are never visited or evaluated.

An NSRE can be adapted to handle structured data both within the input situation and internally within the condition model. Structure allows data to be grouped and joined, allowing a much broader scoped data representation language.

Examples of structured data format include Conceptual Graphs, database tables, XML and languages implemented with XML, such as HTML. A simple Conceptual Graph containing structure could be:

$$[Cat]->(sat\ on)\ ->[Mat]->(is)->[Red].$$

To support structured data, the primitive components of the data language must contain a joining element such as the relation within Conceptual Graphs. If this is implemented, then structured data can be processed using an NSRE process as has been described above.

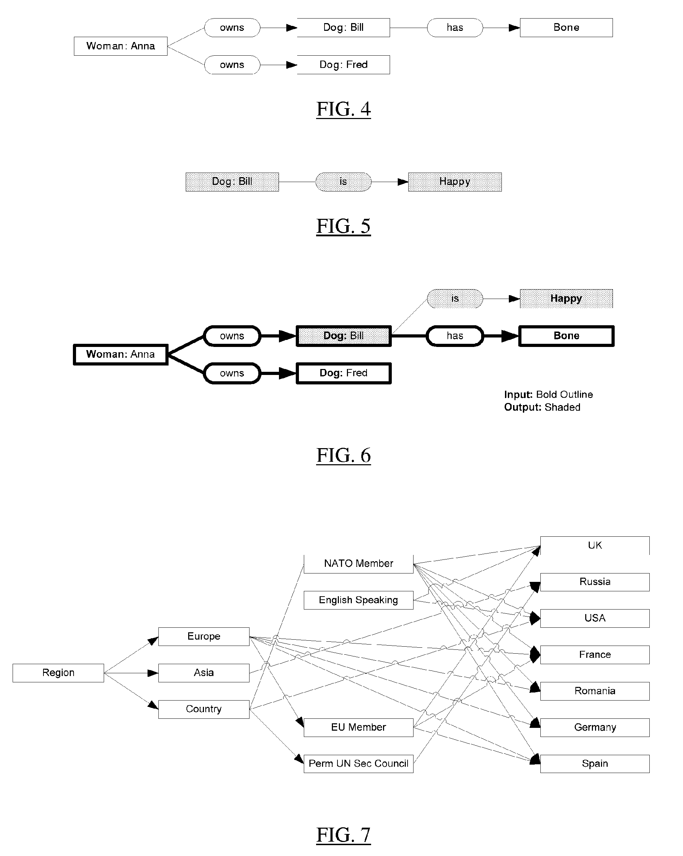

A condition model to process the above example of a Conceptual Graph would be as shown in Figure 3.

To implement structure within the NSRE, the join nodes within the condition model need one additional piece of information and that is if and how the parent nodes join together to form the child node. This can be achieved by having a deterministic ordering of the nodes and storing a joinMap within each node, which lists the numeric value of where nodes are identical. The preceding example could have a Map which contains [2,1]. This would mean that the second concept in the first parent node ([Map]) is the same as the first concept in the second parent node ([Map]).

The basic NSRE function as outlined above with reference to Figure 1 is designed as an extensible framework. Modification to the NSRE can allow the NSRE to handle contextual information. Contextual information allows the NSRE to not only determine if a condition model node is satisfied within the situation, but how many times and where the node is true within the situation and where.

The graph shown in Figure 4 is a simple example of a graph that can be processed using a contextual, structured graph. A Contextual NSRE can successfully handle the difficult case of where the context of the output is as important as the conclusion reached.

To implement the Contextual NSRE, the nodes within the condition model need to know additional information - that is, which node within the input data has satisfied the node in question.

An NSRE may contain the rule:

IF [Dog]->(has)->[Bone]
THEN [Dog]->(is)->[Happy].

The node representing the primitive fragment [Dog]->(has)->[Bone] needs to handle the context of the fragment. This is done by maintaining a list of fragments within the situation that satisfy this node.

In the case of join nodes, two or more lists are needed to represent fragments delivered from each of the parent nodes. The node then has to assess every permutation of all possible fragments to see if the join node itself is satisfied with respect to a joinMap as outlined above.

The output for the above rule applied to the Graph of Figure 4 is shown in Figure 5. The output is also shown in context with the original situation in Figure 6.

Here, knowing which dog is happy is much more useful than just knowing that there is a happy dog.

An NSRE may be adapted to provide "generational rules", which allow rules to be made on previous rules. This may allows an expert to make a series of dependent conclusions seamlessly.

An NSRE may have sets of ontological data which define how the world works, with the NSRE supporting multiple inheritance within the ontology. This allows structures such as that shown in Figure 7 to be constructed.

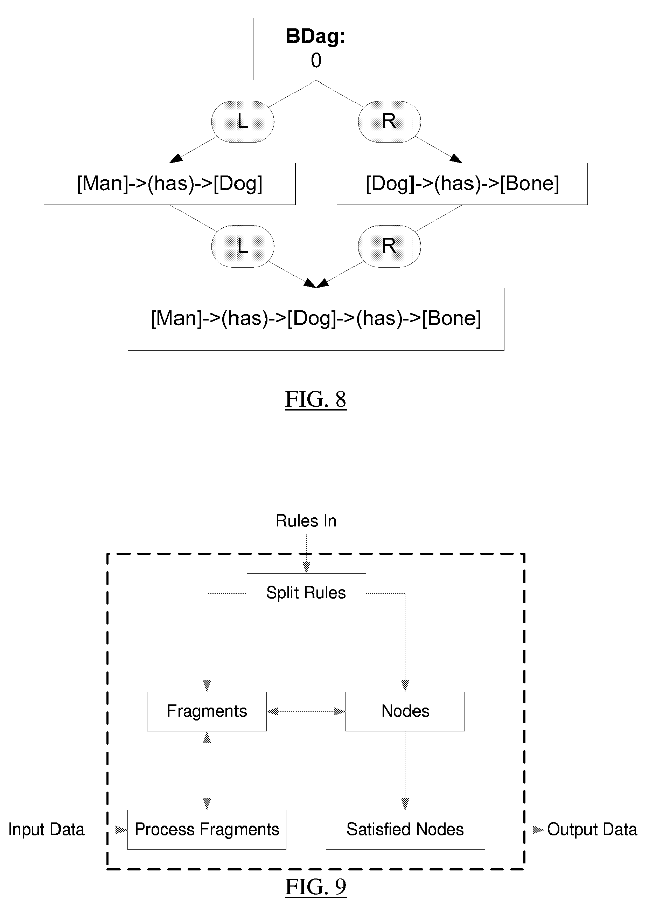

Some further explanation of preferred features of embodiments of the invention is now given with reference to Figure 8.

As before, a preferred embodiment takes rules represented by Conceptual Graphs, breaks them down into their fundamental graph fragments, and recombines the rule by joining these fragments together. This approach has the advantage that when the NSRE is processed, only fundamental fragments that are true need to be processed. Rules which contain fragments that are not true will never even be evaluated.

Figure 8 shows an object BDag (Binary Directed acyclic graph) that holds a description of NSRE rules for a behaviour engine with the rule:

If:

Then:

BDag has split the conceptual graph in the conditional part of the rule into its fundamental fragments, i.e. [Man]->(has)->[Dog] and [Dog]->(has)->[Bone], and has joined these nodes back together to fully describe the whole conditional fragment in the bottom node in Figure 8.

At process time, a situation is applied to the rules engine for evaluation - this data is also split into its fundamental components and introduced to the BDag. When data satisfies a fundamental node, that node tells all its children nodes that it is satisfied for a particular context: *the exact nodes in the input data that satisfied the node.* Nodes under the fundamental nodes will be satisfied when all their parent nodes are satisfied and these too will tell their children the context in which they are true and this propagates throughout the whole BDag. Once the bottom node in Figure 8 is satisfied, it can add its Then component into the BDag with the situation for evaluation. The Then parts effect on the BDag will ripple down, potentially firing more rules.

We could go on to add a further 100 rules of increasing complexity about men with Dogs and the BDag would grow in size. If we used this behaviour engine to process the completely unrelated data then as this situation will not satisfy any nodes of the NSRE BDag with 100 dog rules, no processing takes place, this situation will be processed by this NSRE in about the same time it would be processed by a NSRE containing no rules at all. Put another way, process time is only loosely linked to the number of rules within a NSRE. In the rules system world, where for any given situation most rules will not fire, this mode of operation represents a huge saving of computation time.

Preferred embodiments use conceptual graphs, but these principles can be extended to any data representation format where the data is processed first as its fundamental components.

Preferred additional features are now described.

**Contextual Non-Sequential Rules Engine.** The Conceptual Graph data representation language allows data to be given both structure and contextual information. This allows different instances of the same concept to be distinguished. A preferred embodiment of NSRE makes this contextual information available to the user. This allows the user to make the rules able to fire in several different places within a situation but also to make rules relating the exact contextual structure of the situation. For example, the two statements below are very different.

and

In the second statement, the Dog who has the bone might not necessarily be the same dog that is owned by the man. The second situation will not fire the example rule above if contextual reasoning is used.

**Generational Rules.** Preferred embodiments handle chains of dependent rules by placing these rules into their logical processing order and then separating these rules into generations. Generations are processed sequentially, with the set of rules within each generation being processed non-sequentially. The same BDag is used for every generation and as rules become true in each generation, their conclusions are fed back into this BDag.

**Inheritance.** Data representation languages can support inheritance - these inheritance structures are normally grouped into an object called an ontology. Preferred embodiments allow the user to state inheritance structures such as:

If the following is then presented to the NSRE example above, then the rule will fire due to inheritance.

Figure 9 summarises the NSRE process of embodiments of the invention as described above. A data processing system 1 receives rules and splits them into their fundamental fragments that are joined by nodes, as explained in the foregoing description. The data processing system 1 then processes input data by the rule fragments and produces output data from nodes that are satisfied by their respective rule fragments.

It will be appreciated that, in the foregoing, a "rule" equates to a logic operation.

An NSRE, including the examples given herein, may be used with advantage in data processing systems arranged to replace legacy systems. In this respect, the reader is referred to the specification and drawings of our patent application GB 05 16785.3 filed 16 August 2005, a copy of the specification and drawings being annexed hereto.

In this specification, the verb "comprise" has its normal dictionary meaning, to denote non-exclusive inclusion. That is, use of the word "comprise" (or any of its derivatives) to include one feature or more, does not exclude the possibility of also including further features.

The reader's attention is directed to all and any priority documents identified in connection with this application and to all and any papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A data processing system arranged:

    a. to receive rules data representing a plurality of rules; and
    b. to split each rule into a plurality of fundamental rule fragments with nodes that represent how the fundamental rule fragments interrelate:

    the data processing system being further arranged:

    c. to receive input data;
    d. to process the input data non-sequentially by said fundamental rule fragments; and
    e. to derive an output from each node for which all fundamental rule fragments connected to that node have been satisfied.

2.  A data processing system according to claim 1, wherein said rules have an IF, THEN structure.

3.  A data processing system according to claim 2, wherein each of said fundamental rule fragments comprises a single IF condition.

4.  A data processing system according to claim 2 or 3, wherein said output from each node for which all fundamental rule fragments connected to that node have been satisfied is a THEN result.

5.  A data processing system according to any of the preceding claims, arranged to process data comprising XML elements, value-attribute pairs or concepts and relations for a conceptual graph.

6.  A data processing system according to any of the preceding claims, wherein the rules are arranged into sets of generations which are processed sequentially, the set of rules within each generation being processed non-sequentially.

7.  A data processing system according to any of the preceding claims, wherein the rules include inheritance rules.

8.  A data processing system substantially as hereinbefore described with reference to the accompanying drawings.

9.  A method of processing data, comprising the steps of:

    a. receiving rules data representing a plurality of rules;
    b. splitting each rule into a plurality of fundamental rule fragments with nodes that represent how the fundamental rule fragments interrelate:
    c. receiving input data;
    d. processing the input data non-sequentially by said fundamental rule fragments; and
    e. deriving an output from each node for which all fundamental rule fragments connected to that node have been satisfied.

10. A method according to claim 9, carried out by a data processing system according to any of claims 1 to 8.

11. A method of processing data, substantially as hereinbefore described with reference to the accompanying drawings.

```
        ┌─────────────────────────┐
        │        Situation         │
        └─────────────────────────┘
                    │
                    ▼
          ╭───────────────────╮
          │   Split Situation   │
          ╰───────────────────╯
                    │
                    ▼
      ┌─────────────────────────────┐
      │     Situation Primitives     │
      └─────────────────────────────┘
                    │
                    ▼
          ╭───────────────────╮
          │  Process Condition  │
          ╰───────────────────╯
                    │
                    ▼
        ┌─────────────────────────┐
        │     Satisfied Rules      │
        └─────────────────────────┘
                    │
                    ▼
        ╭─────────────────────────╮
        │  Make Output from Thens  │
        ╰─────────────────────────╯
                    │
                    ▼
        ┌─────────────────────────┐
        │         Output           │
        └─────────────────────────┘
```

FIG. 1

**Rule Engine Model**

| Age: OAP | Smoker: True | Gender: Male | Travel Time: 1 week | Travel Destination: America | Baggage Covered: No |

Join Node      Join Node

THEN
Life Insurance Premium: High

THEN
Travel Insurance Premium: Low

**Situation 1: [Age: OAP][Smoker: True][Gender: Male]**

| Age: OAP | Smoker: True | Gender: Male | Travel Time: 1 week | Travel Destination: America | Baggage Covered: No |

Join Node      Join Node

THEN
Life Insurance Premium: High

THEN
Travel Insurance Premium: Low

**Situation 2: [Travel Destination: America][Smoker: True][Travel Time: 1 week][Baggage Covered: Yes]**

| Age: OAP | Smoker: True | Gender: Male | Travel Time: 1 week | Travel Destination: America | Baggage Covered: No |

Join Node      Join Node

THEN
Life Insurance Premium: High

THEN
Travel Insurance Premium: Low

FIG. 2

[Cat]->(sat on)->[Mat]      [Mat]->(is)->[Red]

Join Node

[Cat]->(sat on)->[Mat]->(is)->[Red]

FIG. 3

FIG. 4

FIG. 5

Input: Bold Outline
Output: Shaded

FIG. 6

FIG. 7

**BDag:**
0

L        R

[Man]->(has)->[Dog]        [Dog]->(has)->[Bone]

L        R

[Man]->(has)->[Dog]->(has)->[Bone]

FIG. 8

Rules In

Split Rules

Fragments        Nodes

Input Data    Process Fragments    Satisfied Nodes    Output Data

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0516785 A